# EUROPÄISCHE PATENTSCHRIFT

(11) **EP 2 134 595 B1**
(45) Veröffentlichungstag und Bekanntmachung des Hinweises auf die Patenterteilung: **10.09.2014**
(21) Anmeldenummer: 07701920.6
(22) Anmeldetag: 05.03.2007
(51) Int. Cl.: B63B 39/06

(54) **DOPPELTRIMMKLAPPE**
DOUBLE TRIM HATCH
VOLET D'AJUSTEMENT D'ASSIETTE DOUBLE

(43) Veröffentlichungstag der Anmeldung: 23.12.2009
(73) Patentinhaber: Müller, Peter A., 8136 Gattikon (CH)
(72) Erfinder: Müller, Peter A., 8136 Gattikon (CH)
(74) Vertreter: Isler, Jörg
(86) Internationale Anmeldenummer: PCT/CH2007/000120
(87) Internationale Veröffentlichungsnummer: WO 2008/106807

(56) Entgegenhaltungen:
- WO-A-96/20105
- DE-C1- 19 753 926
- US-A- 3 313 262
- US-A- 3 738 301
- US-A- 5 193 478
- US-A- 5 628 272
- US-A1- 2003 127 035
- US-A1- 2006 217 011
- US-B1- 7 013 825

## Beschreibung

### Technisches Gebiet

Die Erfindung geht aus von einer Doppeltrimmklappe für Wasserfahrzeuge, nach dem Oberbegriff des ersten Anspruchs.

### Stand der Technik

Trimmklappen werden zur Verbesserung des Gleitwinkels von Wasserfahrzeugen verwendet, welche mittels Strömungsumlenkungen die entsprechenden Auftriebszonen verschieben, um damit günstigere Gewichtsverteilungen zu ermöglichen und oder das Fahrzeug schneller ins Gleiten zu bringen, wie beschrieben im US Patent 3,628,487 oder auch US 2004/0014376 A1.

In letzter Zeit sind auch andere Systeme auf dem Markt, wie z.B. absenkbare Staukeile, so zeigt zum Beispiel die Stand der Technik Dokument US 5,628,272 eine Staukeilklappe mit einer Staukeilklappenendung, welche über einen Wirkzylinder absenkbar ist. Weitere absenkbare Staukeile sind u.a. im Patent TW499382B oder auch US 6,006,689 beschrieben.

### Darstellung der Erfindung

Der Erfindung liegt die Aufgabe zugrunde, bei einer Trimmklappe für Wasserfahrzeuge der eingangs genannten Art, eine wirkungsvolle Trimmung mit höchstmöglichem Auftrieb und niedrigstem Widerstandswerten bei langsamen als auch bei höheren Geschwindigkeiten zu erzielen. Die Trimmklappe soll gleichzeitiger durch eine Kinematik vereinfacht werden, welches es erlaubt, die verschiedenen Ziele mit nur einem Hydraulikzylinder zu bewältigen und Kursabweichungen, als Folge der Trimmung, zu reduzieren resp. zu eliminieren.

Staukeile bewähren sich bei langsameren Geschwindigkeiten vorzüglich, da sie rasch Auftrieb und wenig Widerstand erzeugen. Bei höheren Geschwindigkeiten sind konventionelle Trimmklappen im Vorteil, da diese dann, praktisch als Wasserfahrzeugverlängerung, wirksamer in der Trimmung sind, bei gleichzeitigem geringerem Widerstandsaufbau als die Staukeilvariante.

Trimmklappen haben aber die Nebenwirkung, wenn sie nicht parallel hoch- resp. tiefgefahren werden, dass dies zu einer Kursänderung des Wasserfahrzeuges durch Auftriebs- und Widerstandsdifferenzen zwischen Steuer- und Backbordseiten führt, ein Umstand, welches sogar als Steuerhilfe in diversen Applikationen bei grossen jetgetriebenen Wasserfahrzeugen eingesetzt wird. Im Umgang mit der üblichen Fahrzeugtrimmung ist die Nebenwirkung aber äusserst unangenehm, weil es für den Betreiber zu einer Lenkkorrektur zwingt, jedes Mal wenn die Trimmklappen - ob Staukeil oder Klappe - betätigt werden, um das Fahrzeug auf einem vorgegebenen Kurs zu halten.

Durch die Doppelklappe, welche einerseits als Staukeilelement ausgebildet ist und in der ersten Phase so zur Wirkung kommt und dem zweiten Element, welches als Standardklappe bei höheren Leistungsbedarf in Aktion tritt, wobei beide Klappen mittels eines einzigen Aktors betätigt werden, erbringt die Doppelklappe die gewünschte Trimmleistung zu einem wirtschaftlichen Preis und mittels dem eingebauten Kurskorrekturführungsmittel, bleibt das Wasserfahrzeug bei Trimmänderung weiterhin auf dem gewählten Kurs ohne bedeutende Gegenlenkmassnahmen.

Die Doppeltrimmklappe bedarf keiner speziellen Legierung und kann aus entsprechendem korrosionsfestem Metall oder Kunststoff oder aus einer Kombination aus beiden Materialien gefertigt werden.

Erfindungsgemäss wird dies durch die Merkmale des ersten Anspruches erreicht, welche mittels zwei Klappen die Trimmung eines Wasserfahrzeuges optimieren.

Kern der Erfindung ist, mittels einer Doppeltrimmklappe die Trimmung eines Wasserfahrzeuges über möglichst den ganzen Trimmbereich, den bestmöglichen Wirkungsgrad zu erzielen und zudem eine entsprechende automatische Kurskorrekturführung integriert zu haben.

Weitere vorteilhafte Ausgestaltungen der Erfindung ergeben sich aus den Unteransprüchen.

### Kurze Beschreibung der Zeichnungen

Im Folgenden werden anhand der Zeichnungen Ausführungsbeispiele der Erfindung näher erläutert. Gleiche Elemente sind in den verschiedenen Figuren mit den gleichen Bezugszeichen versehen.

Es zeigen:
- Fig. 1: eine schematische Seitenansicht auf eine Doppeltrimmklappe, mit den wichtigsten Elementen für die Trimmfunktion
- Fig. 2: eine schematische Seitenansicht auf eine Doppeltrimmklappe mit der aktivierten Staukeilklappe
- Fig. 3: eine schematische Seitenansicht auf eine Doppeltrimmklappe mit der aktivierten Staukeilklappe und aktivierten Bodenklappe
- Fig. 4: eine schematische Seitenansicht auf eine Doppeltrimmklappe, mit vorgehängter Staukeilklappe und angedeuteter Absenkung der Staukeilklappe
- Fig. 5: eine schematische Aufsicht auf eine Doppeltrimmklappe, mit den wichtigsten Elementen für die Trimmfunktion und integrierter Kurskorrekturelement
- Fig. 5a: eine schematische Aufsicht auf eine verkürzte Staukeilklappe mit integriertem Kurskorrekturelement
- Fig. 6: eine schematische Aufsicht auf eine Trimmklappe, mit separaten Kurskorrekturfinnen
- Fig. 7: eine schematische Seitenansicht auf eine Klappe mit Kurskorrekturfinne und skizzierter Absenkung in die Wasserströmung
- Fig. 8: eine schematische Rückansicht auf eine Staukeilklappenendung mit Aussparungen für die Kurskorrekturfinnen
- Fig. 9: ein Funktionsschema für eine elektronische Kurskorrektur mittels eines Lenkaktors mit einer Lenkradrückmeldungsneutralisierung

Es sind nur die für das unmittelbare Verständnis der Erfindung wesentlichen Elemente schematisch gezeigt.

### Weg zur Ausführung der Erfindung

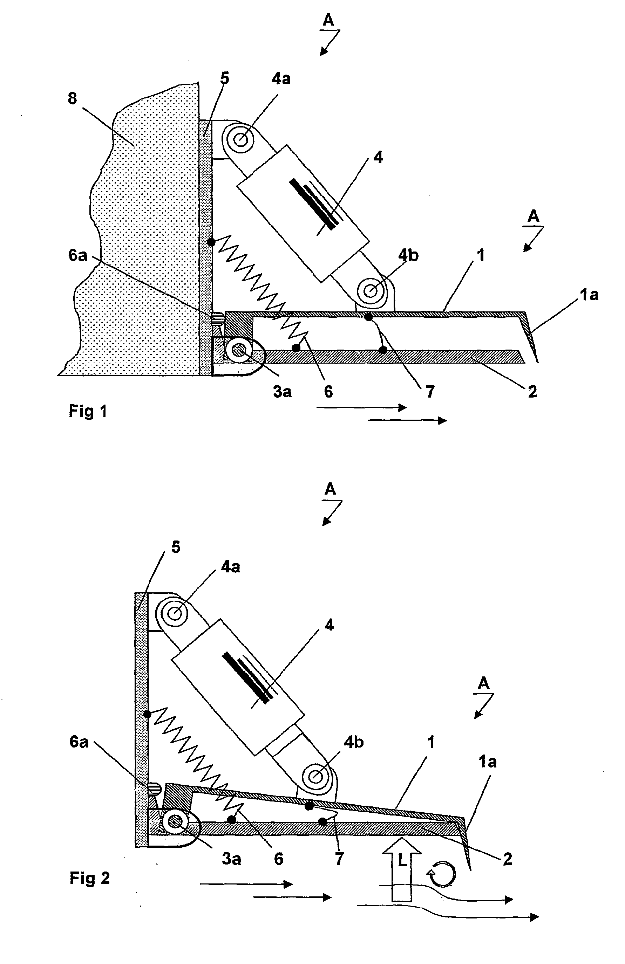

- Fig. 1: zeigt eine schematische Seitenansicht auf eine sich in der Ausgangsposition befindenden Doppeltrimmklappe A, welche aus einer Staukeilklappe 1 und einer Bodenklappe 2 besteht und diese über ein Scharnier 3a drehbar gelagert sind. An der Staukeilklappe 1 ist ein Wirkzylinder 4 festgemacht, drehgelagert durch die Lager 4a, 4b, wobei der Wirkzylinder 4 sich an einer Spiegelplatte 5 abstützt.
An der Bodenplatte 2 befindet sich eine Rückholfeder 6, um zu gewährleisten, dass die Bodenplatte 2 sich bei nicht Gebrauch am Anschlag 6a befindet und damit eine definierte Fluchtung zur Wasserströmung ermöglicht. Im Weiteren ist die Bodenklappe 2 mittels einem flexiblen Verbindungsmittel 7 mit der Staukeilklappe 1 verbunden, sodass auch im Fall einer Federwirkungseinbusse, die Bodenplatte 2, mittels des Wirkzylinders 4, voll hochgefahren werden kann und die Wasserströmung, dargestellt durch Pfeile, ungehindert hinter dem Wasserfahrzeug abfliessen kann.
Der Wirkzylinder 4 kann sich auch direkt am Heck 8 eines Wasserfahrzeuges abstützen. Der Wirkzylinder 4 kann ein Elektroantrieb oder ein Fluidzylinder sein. Ist der Wirkzylinder 4 ein Fluidzylinder, so kann dieser mit einer nicht dargestellten mechanischen Verriegelung ausgerüstet werden, sodass bei einer Leckage oder Druckverlust, die Trimmung nicht wegdriftet. Die Rückholfeder 6 kann eine längs geführte Druck- oder Zugfeder oder eine Schenkelfeder oder ähnliches sein.
- Fig. 2: zeigt eine schematische Seitenansicht auf eine Doppeltrimmklappe A mit der in Aktion stehenden Staukeilklappe 1. Durch die Aktivierung des Wirkzylinders 4 mittels Betätigung eines Schalters 12 oder aktiviert durch einen elektronischen Lagesensor 13, senkt sich die Staukeilklappe 1 und damit auch die Staukeilklappenendung 1a und baut einen Strömungswiderstand auf, als auch eine Auftriebskomponente, dargestellten durch den Pfeil L. Die Bodenplatte 2 bewegt sich dabei nicht, bedingt einerseits durch die nach oben drückende Wasserströmung und anderseits aufgrund der Rückholfeder 6 und dem Anschlag 6a. Das flexible Verbindungselement 7 biegt oder faltet sich entsprechend durch das Absenken der Staukeilklappe 1.

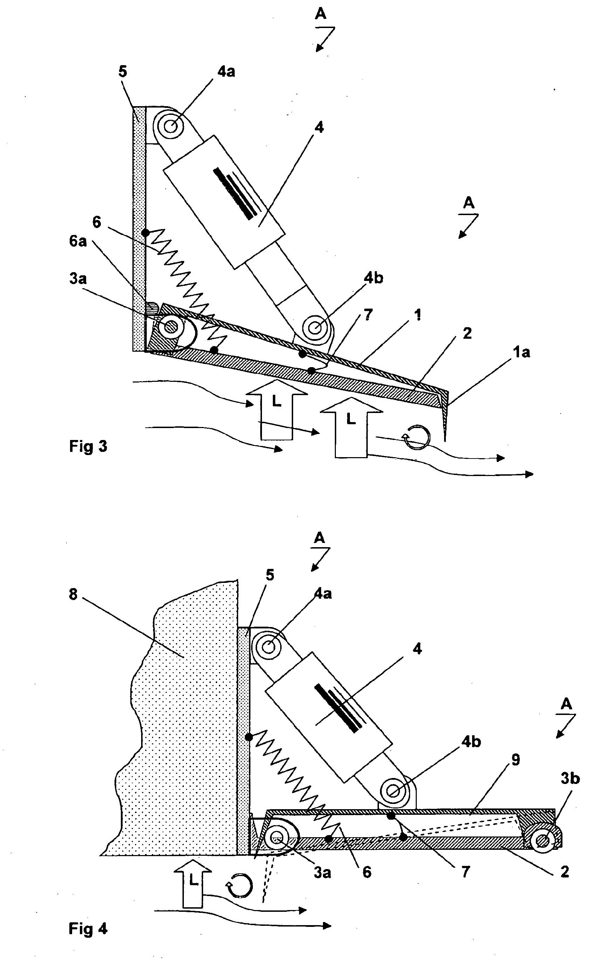

- Fig. 3: zeigt eine schematische Seitenansicht auf eine Doppeltrimmklappe A mit der in Aktion stehenden Staukeilklappe 1 und der in Aktion stehenden Bodenplatte 2. Durch die Aktivierung des Wirkzylinders 4 welche die Staukeilklappe 1 auf die Bodenplatte 2 drückt, wird durch das weitere Ausfahren des Wirkzylinders 4, die Bodenplatte 2 gegen die Feder 6 nach unten gedrückt, bis zum maximalen Ausfahrpunkt des Wirkzylinders 4.
Damit steigt der Auftrieb weiter an - dargestellt durch die Pfeile L - und die Trimmung des Wasserfahrzeuges nimmt weiter zu.
- Fig. 4: zeigt eine schematische Seitenansicht auf eine weitere Variante der in Fig 1 - 3 beschriebenen Doppeltrimmklappe A, welche aus einer Frontstaukeilklappe 9 und der Bodenklappe 2 besteht und über die Scharniere 3a, 3b drehbar gelagert sind. An der Frontstaukeilklappe 9 ist ein Wirkzylinder 4 drehgelagert durch die Lager 4a, 4b festgemacht, gleich wie die in den Fig. 1 - 3 dargestellten Doppeltrimmklappe A. Die gestrichelte Linie zeigt das Absenken der Frontstaukeilklappe 9, welche die Staukeilklappenendung 1a in diesem Fall vor der Bodenklappe 2 wirksam wird, nämlich direkt am Heck 8 des Wasserfahrzeuges und die Bodenplatte 2 somit zweitrangig wirkt.

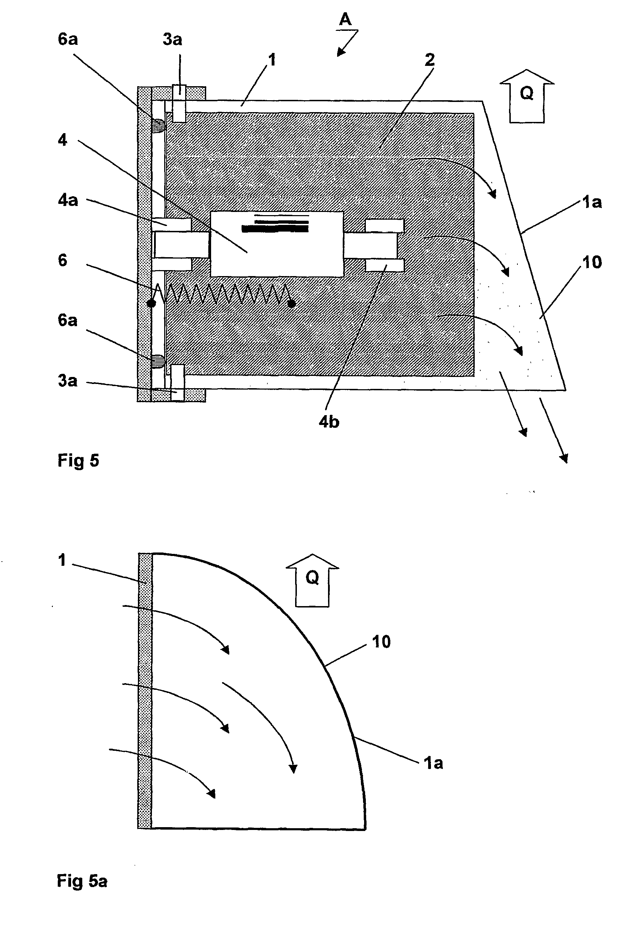

- Fig. 5: zeigt eine schematische Aufsicht auf eine Doppeltrimmklappe A mit der Staukeilklappe 1 mit dem Kurskorrekturmittel 10, der Bodenklappe 2, beide drehgelagert mittels des Scharniers 3a und dem Wirkzylinder 4, welcher sich über die Drehlagerung 4a an der Spiegelplatte 5 abstützt und über die Drehlagerung 4b an der Staukeilklappe 1 festgemacht ist. Die Rückholfeder 6 ist mit einem Ende mit der Spiegelplatte 5 und, durch eine hier nicht dargestellte Öffnung in der Staukeilklappe 1, mit dem gegenüberliegenden Ende mit der Bodenplatte 2 verbunden.
Durch ein nicht paralleles Absenken einer der beiden Staukeilklappen 1, z.B. bei seitlicher Neigung eines Wasserfahrzeuges, wird nicht nur der an der gewünschten Stelle Auftrieb erzeugt, sondern führt, aufgrund unterschiedlicher Widerstandswerte, auch zu einer Drehung, sprich Kursabweichung des Wasserfahrzeuges. Um diesem Effekt entgegenzuwirken, wird die Staukeilklappenendung 1 a mittels des Kurskorrekturmittels 10 in eine günstige Form gebracht, sodass die Wasserströmung auch seitlich entlang der schrägestellten Staukeilklappenendung 1a fliessen kann. Die Schrägstellung kann linear oder bogenförmig sein. Dieser Umlenkströmungsfluss erzeugt als Gegenreaktion eine Querkraft Q - dargestellt durch den Pfeil Q-, welches dem Wasserfahrzeugkursabdrift entgegenwirkt und somit den vorgewählten Kurs des Wasserfahrzeuges genauer hält und damit weniger, resp. überhaupt nicht gegengelenkt werden muss.
- Fig. 5a: zeigt eine schematische Aufsicht auf eine Staukeilklappe 1, welches über Drehelemente verfügen oder linear über Führungsmittel abgesenkt werden kann, mit der Staukeilklappenendung 1 a und dem Kurskorrekturmittel 10, welches den Auftrieb erzeugt und gleichzeitig auch die Wasserströmung seitlich ablenkt und damit zu einer Querkraft Q führt - dargestellt durch den Pfeil Q. Die Ausgestaltung der Form des Kurskorrekturmittels 10 kann geradlinig und oder gebogen sein.

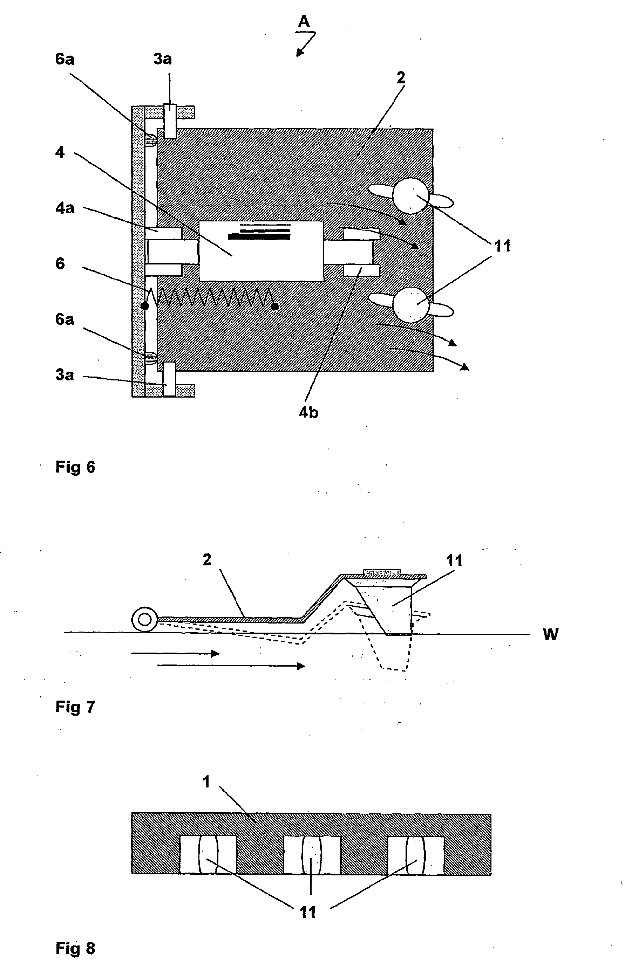

- Fig. 6: zeigt eine schematische Aufsicht auf eine nicht beanspruchte Bodenklappe 2 mit integrierter Kurskorrekturfinnen 11, welche auch drehbar gelagert sein können. Je nach Wasserfahrzeugtyp kann eine optimierte Voreinstellung gewählt werden, sodass die Steuerkorrektur bei der Trimmaktivierung möglichst gering bleibt.
- Fig. 7: zeigt eine schematische Seitenansicht der nicht beanspruchte Bodenplatte 2 mit der integrierten Kurskorrekturfinne 11, welche bei eingefahrenem Wirkzylinder 4 die Wasserlinie W kaum berührt. Die gestrichelten Linien zeigen ein Absenken der Bodenklappe 2 und das gleichzeitige Eintauchen der Kurskorrekturfinne 11 in die Wasserströmung.
- Fig. 8: zeigt eine nicht beanspruchte schematische Rückansicht auf eine Staukeilklappenendung 1a und den integrierten Kurskorrekturfinnen 11, welche fest oder drehbar gelagert sind.

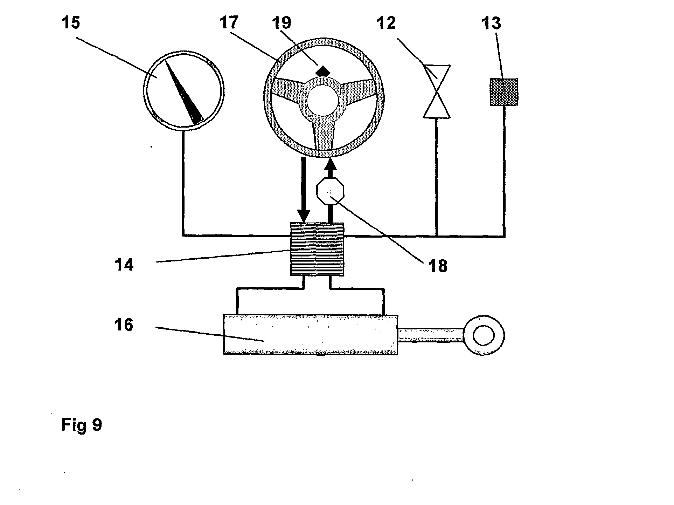

- Fig. 9: zeigt ein Funktionsschema einer elektronischen Kurskorrekturanlage, welche eine Lenkradrückmeldung für diesen Fall unterbindet. Die Betätigung des Schalters 12 oder die Signalgebung eines elektronischen Lagesensors 13 zur Aktivierung der Doppeltrimmklappe A bewirkt, bei einer nicht parallelen Betätigung der Doppeltrimmklappe A, umgehend zu einem Kursabdrift des Wasserfahrzeuges, welches mittels der Kurskorrekturmittel 10 oder Kurskorrekturfinne 11 und oder mittels eines elektronischen Steuergerätes 14 korrigiert wird, dadurch, dass bei Betätigung des Schalters 12, resp. Signalgebung des Lagesensors 13, das Steuergerät 14 den aktuellen Kurs des Wasserfahrzeuges über den elektronischen Kompass 15 misst, den Wert abspeichert und danach erst die Doppeltrimmklappe A betätigt wird und bei Abweichung vom Kurs den Befehl an den Aktor 16 des Wasserfahrzeugruders oder Z-Antriebes oder Aussenborder gibt, eine entsprechende Lenkbewegung auszuführen, um den vorgehend gespeicherten Kurswert beizubehalten. Der elektronische Kompass 15 kann ein Magnetfeldsonden- oder ein GPS Gerät oder ähnliches sein.
Zentral ist, dass bei Änderung der Ruderlage, oder Z-Antriebslenkwinkel oder Aussenborderlenkwinkel mittels des Aktors 16, das Lenkrad 17 aufgrund des Entkoppelungsmittels 18 nicht bewegt wird, damit der Steuermann bei einer automatischen Kurskorrektur nicht selbst gegen die automatische Lenkbewegung kontraproduktiv gegenlenken würde.
Das Entkoppelungsmittel 18 wird bei einer elektrischen Lenkung, das entsprechende Lenksteuersignal nicht an das Lenkrad weiterleiten, bei einer hydraulischen Anlage wird das Entkoppelungsmittel 18 mittels eines Ventils oder einer mechanischen Kupplung oder ähnlichem entkoppelt.
Das Steuergerät 14 akzeptiert ein gewisses Driftfenster, d.h. eine entsprechende Kursabweichungstoleranz, um nicht ständig den Aktor 16 nachstellen zu müssen. Dem gegenüber lässt das Steuergerät 14 eine Toleranz der Steuerradbewegung ebenfalls zu. Wird das Lenkrad 17 aber über einen bestimmten Winkel gedreht, welches vom Drehwinkelsensor 19 am Lenkrad 17 erfasst wird, so wird die Kurskorrekturmassnahme aufgehoben und der Aktor 16 wird automatisch in die Standardpositionsbeziehung zwischen Lenkrad 17 und Ruderlage, resp. Z-Antrieb, resp Aussenborder gesetzt.

Selbstverständlich ist die Erfindung nicht nur auf die gezeigten und beschriebenen Ausführungsbeispiele beschränkt.

### Bezugszeichenliste

- 1: Staukeilklappe
- 1a: Staukeilklappenendung
- 2: Bodenklappe
- 3a, 3b: Scharnier
- 4: Wirkzylinder
- 4a,4b: Lager
- 5: Spiegelplatte
- 6: Rückholfeder
- 6a: Anschlag
- 7: Verbindungsmittel
- 8: Heck
- 9: Frontstaukeilklappe
- 10: Kurskorrekturmittel
- 11: Kurskorrekturfinne
- 12: Schalter
- 13: Lagesensors
- 14: Steuergerätes
- 15: elektronische Kompasse
- 16: Aktor
- 17: Lenkrad
- 18: Entkoppelungsmittels
- 19: Drehwinkelsensor
- A: Doppeltrimmklappe
- L: Auftriebskraft
- Q: Querkraft

## Patentansprüche

1. Doppeltrimmklappe (A) für ein Wasserfahrzeug,
**dadurch gekennzeichnet,**
**dass** die Doppeltrimmklappe (A) eine Staukeilklappe (1) oder eine Frontstaukeilklappe (9), eine Staukeilklappenendung (1a), eine Bodenklappe (2) aufweist, wobei die Hubbewegung der Staukeilklappe (1) oder Frontstaukeilklappe (9) über einen Wirkzylinder (4) erfolgt und in die Wasserströmung ausfahrbar ist.

2. Doppeltrimmklappe (A) nach Anspruch 1,
**dadurch gekennzeichnet,**
**dass** die Betätigung der Bodenklappe (2) über die Staukeilklappe (1) erfolgt.

3. Doppeltrimmklappe (A) nach Anspruch 1 oder 2,
**dadurch gekennzeichnet,**
**dass** die Doppeltrimmklappe (A) über Scharniere (3a, 3b) in die Wasserströmung ausfahrbar ist, und / oder dass die Staukeilklappe (1)oder die Frontstaukeilklappe (9) eine Staukeilklappenendung (1 a) aufweist.

4. Doppeltrimmklappe (A) nach einem der Ansprüche 1 bis 3,
**dadurch gekennzeichnet,**
**dass** die Bodenklappe (2) über eine Rückholfeder (6) und über einen Anschlag (6a) verfügt.

5. Doppeltrimmklappe (A) nach einem der Ansprüche 1 bis 4,
**dadurch gekennzeichnet,**
**dass** die Staukeilklappe (1) oder die Frontstaukeilklappe (9) und die Bodenklappe (2) über ein Verbindungsmittel (7) miteinander verbunden sind.

6. Doppeltrimmklappe (A) nach einem der Ansprüche 1 bis 5,
**dadurch gekennzeichnet,**
**dass** die Bodenklappe (2) einen Wirkzylinder (4) und mindestens ein Kurskorrekturmittel (10) oder eine Kurskorrekturfinne (11) aufweist.

7. Doppeltrimmklappe (A) nach einem der Ansprüche 1 bis 6,
**dadurch gekennzeichnet,**
**dass** die Staukeilklappe (1) oder die Frontstaukeilklappe (9) ein Kurskorrekturmittel (10) oder mindestens eine Kurskorrekturfinne (11) aufweist, und / oder dass die Staukeilklappe (1) oder Frontstaukeilklappe (9) linear ausfahrbar ist und über ein Kurskorrekturmittel (10) oder über eine Kurskorrekturfinne (11) verfügt.

8. Doppeltrimmklappe (A)nach einem der Ansprüche 1 bis 7,
**dadurch gekennzeichnet,**
**dass** die Bodenklappe (2) starr am Heck (8) befestigt ist.

9. Doppeltrimmklappe (A) nach einem der Ansprüche 1 bis 8,
**dadurch gekennzeichnet,**
**dass** der Wirkzylinder (4) ein elektrischer Antrieb oder ein Fluidzylinder darstellt, und / oder dass der Fluidzylinder über eine mechanische Hubverriegelung verfügt.

10. Doppeltrimmklappe (A) nach einem der Ansprüche 1 bis 9,
**dadurch gekennzeichnet,**
**dass** die Kurskorrektur über ein Steuergerät (14) erfolgt

11. Doppeltrimmklappe (A) nach einem der Ansprüche 1 bis 10,
**dadurch gekennzeichnet,**
**dass** das Steuergerät (14) das Signal der Trimmverstellung durch Drücken des Schalters (12), oder Erkennung einer unmittelbar zu erfolgenden Trimmkorrektur durch den Lagesensor (13), als Speicherbefehl des Ist-Kurses des Wasserfahrzeuges übernimmt, danach die Trimmung mittels des Wirkzylinders (4) ausführt und bei Kursabweichung den Aktor (16) und das Entkoppelungsmittel (18) aktiviert.

12. Doppeltrimmklappe (A) nach einem der Ansprüche 1 bis 11,
**dadurch gekennzeichnet,**
**dass** der Ist-Kurs aus dem Wert des elektronischen Kompasses (15) gelesen wird, und / oder dass das Entkoppelungsmittel (18) die Lenkkorrekturen des Aktors (16) nicht auf das Lenkrad (17) überträgt.

13. Doppeltrimmklappe (A) nach einem der Ansprüche 1 bis 12,
**dadurch gekennzeichnet,**
**dass** die Lenkbewegung am Lenkrad (17), welche durch den Wasserfahrzeugführer erfolgt, über eine Bewegungswinkeltoleranz verfügt, die mittels eines Winkelgebers (19) überwacht wird und bei Überschreitung eines vorgegebenen Positionswinkels des Lenkrades (17), das Entkoppelungsmittel (18) deaktiviert wird und der Korrelationswert zwischen Lenkrad (17) und Stellung des Aktors (16) selbsttätig auf den ursprüngliche Wert zurückführt.

14. Doppeltrimmklappe (A) nach einem der Ansprüche 1 bis 13,
**dadurch gekennzeichnet,**
**dass** der elektronische Kompass ein GPS- oder ein Magnetfeldsonden oder ähnliches Gerät ist.

15. Doppeltrimmklappe (A) nach einem der Ansprüche 1 bis 13
**dadurch gekennzeichnet,**
**dass** das Entkoppelungsmittel auf elektrischer, fluider oder mechanischer Basis erfolgt.

## Claims

1. Double trim tab (A) for a watercraft **characterized in that** the double trim tab (A) has a flow interceptor (1) or a front flow interceptor (9), a flow interceptor end (1a), a bottom tab (2), in which connection the lifting movement of the flow interceptor (1) or front flow interceptor (9) occurs via an actuation cylinder (4) and can be extended into the water flow.

2. Double trim tab (A) according to claim 1 **characterized in that** the actuation of the bottom tab (2) via the flow interceptor (1).

3. Double trim tab (A) according to claim 1 or 2 **characterized in that** extending the double trim tab (A) into the water flow via hinges (3a, 3b) and / or the flow interceptor (1) or the front flow interceptor (9) having a flow interceptor end (1 a).

4. Double trim tab (A) according to one of the claims 1 to 3 **characterized in that** the bottom tab (2) having a return spring (6) and a limit stop (6a).

5. Double trim tab (A) according to one of the claims 1 to 4 **characterized in that** the flow interceptor (1) or front flow interceptor (9) and bottom tab (2) being connected to each other via a connecting device (7).

6. Double trim tab (A) according to one of the claims 1 to 5 **characterized in that** the bottom tab (2) having an actuation cylinder (4) and at least one course correction device (10) or a course correction fin (11).

7. Double trim tab (A) according to one of the claims 1 to 6 **characterized in that** the flow interceptor (1) or front flow interceptor (9) having a course correction device (10) or at least one course correction fin (11) and / or extending the flow interceptor (1) or front flow interceptor (9) in a linear fashion and having a course correction device (10) or a course correction fin (11).

8. Double trim tab (A) according to one of the claims 1 to 7 **characterized in that** the rigid attachment of the bottom tab (2) to the stern (8).

9. Double trim tab (A) according to one of the claims 1 to 8 **characterized in that** the actuation cylinder (4) being an electric drive or a fluid cylinder and / or the fluid cylinder having a mechanical lift locking device.

10. Double trim tab (A) according to one of the claims 1 to 9 **characterized in that** the course correction being effected via a control device (14)

11. Double trim tab (A) according to one of the claims 1 to 10 **characterized in that** the control device (14) upon receiving a signal of trim adjustment when the switch (12) is pressed or upon recognition of a directly resulting trim correction by the position sensor (13) takes over according to a stored command of the actual course of the watercraft, and thereafter performs the trimming by means of the actuation cylinder (4) and in the event of course deviation activates the actuator (16) and uncoupling device (18).

12. Double trim tab (A) according to one of the claims 1 to 11 **characterized in that** the actual course being read from the value of the electronic compass (15) and / the uncoupling device (18) not transferring the steering corrections of the actuator (16) to the steering wheel (17).

13. Double trim tab (A) according to one of the claims 1 to 12 **characterized in that** the steering movement at the steering wheel (17), which is made by the watercraft skipper, possesses a movement angle tolerance, and is monitored by an angle position transducer, and in the event of a prescribed position angle of the steering wheel (17) being exceeded, the uncoupling device (18) is deactivated, and the correlation value between steering wheel (17) and the position of the actuator (16) is returned automatically to the original value.

14. Double trim tab (A) according to one of the claims 1 to 13 **characterized in that** the electronic compass being a GPS or magnetic field probe or similar.

15. Double trim tab (A) according to one of the claims 1 to 13 **characterized in that** the uncoupling device acting on an electric, fluid or mechanical basis.

## Revendications

1. Volet d'assiette double (A) pour un véhicule marin, **caractérisé en ce que** le volet d'assiette double (A) comporte un volet de retenue (1) ou un volet de retenue avant (9), un volet de retenue terminal (1a), un volet de fond (2), dans lequel le mouvement de levage du volet de retenue (1) ou du volet de retenue avant (9) est effectué par un actuateur (4) et peut sortir dans le courant de l'eau.

2. Volet d'assiette double (A) selon la revendication 1, **caractérisé en ce que** l'actionnement du volet de fond (2) s'effectue par le volet de retenue (1)

3. Volet d'assiette double (A) selon la revendication 1 ou 2, **caractérisé en ce que** le volet d'assiette double (A) peut sortir dans le courant de l'eau par des charnières (3a, 3b), et / ou que le volet de retenue (1) ou volet de retenue avant (9) comporte un volet de retenue terminal (1a).

4. Volet d'assiette double (A) selon l'une des revendications 1 à 3 **caractérisé en ce que** le volet de fond (2) comporte un ressort de rappel (6) et un arrêt (6a).

5. Volet d'assiette double (A) selon l'une des revendications 1 à 4 **caractérisé en ce que** le volet de retenue (1) ou le volet de retenue avant (9) et le volet de fond (2) sont connectés avec un moyen de connexion (7).

6. Volet d'assiette double (A) selon l'une des revendications 1 à 5 **caractérisé en ce que** le volet de fond (2) comporte un actuateur (4) et au moins un moyen de correction pour la route (10) ou une ailette de correction pour la route (11).

7. Volet d'assiette double (A) selon l'une des revendications 1 à 6 **caractérisé en ce que** le volet de retenue (1) ou le volet de retenue avant (9) comporte un moyen de correction pour la route (10) ou au moins une ailette de correction pour la route (11), et / ou que le volet de retenue (1) ou le volet de retenue avant (9) peut sortir de façon linéaire et comporte un moyen de correction pour la route (10) ou une ailette de correction pour la route (11).

8. Volet d'assiette double (A) selon l'une des revendications 1 à 7 **caractérisé en ce que** le volet de fond (2) est fixé de façon rigide à la poupe (8).

9. Volet d'assiette double (A) selon l'une des revendications 1 à 8 **caractérisé en ce que** l'actuateur (4) est un mécanisme d'entraînement électrique ou une commande hydraulique, et / ou que la commande hydraulique comporte un dispositif de verrouillage.

10. Volet d'assiette double (A) selon l'une des revendications 1 à 9 **caractérisé en ce que** le moyen de correction s'effectue par un appareil de commande (14).

11. Volet d'assiette double (A) selon l'une des revendications 1 à 10 **caractérisé en ce que** l'appareil de commande (14) lorsqu'il reçoit le signal du réglage d'assiette par pression sur l'interrupteur (12), ou par la reconnaissance de la correction d'assiette directe par le capteur de position (13), prend le contrôle selon une opération mise en mémoire de la trajectoire réelle du véhicule marin, puis exécute la correction de l'assiette au moyen de l'interrupteur (4) et dans le cas d'une déviation de route active l'actionneur (16) et le moyen de découplage (18).

12. Volet d'assiette double (A) selon l'une des revendications 1 à 11 **caractérisé en ce que** la trajectoire réelle est choisie par la valeur du compas électronique (15), et / ou que le moyen de découplage (18) ne transmet pas la correction de la direction de l'actionneur (16) au volant (17).

13. Volet d'assiette double (A) selon l'une des revendications 1 à 12 **caractérisé en ce que** la manoeuvre du volant au volant (17) par le conducteur du véhicule marin a une tolérance de mouvement d'angle, qui est surveillée par un capteur angulaire et qui désactive le moyen de découplage (18) quand l'angle de position du volant (17) est dépassé et que la valeur de corrélation entre le volant (17) et la position de l'actionneur (16) est automatiquement remise sur la valeur originale.

14. Volet d'assiette double (A) selon l'une des revendications 1 à 13 **caractérisé en ce que** le compas électronique (15) est un système GPS ou une sonde à champ magnétique ou similaire.

15. Volet d'assiette double (A) selon l'une des revendications 1 à 13 **caractérisé en ce que** le moyen de découplage est effectué sur une base électrique, fluidique ou mécanique.
